# EUROPEAN PATENT APPLICATION

(11) **EP 2 835 560 A1**
(43) Date of publication of application: **11.02.2015**
(21) Application number: 12873844.0
(22) Date of filing: 04.04.2012
(51) Int. Cl.: F16F 15/134, F16D 3/12, F16D 13/64

(54) **TORQUE FLUCTUATION ABSORBING DEVICE AND TRANSMISSION**

(71) Applicant: Toyota Jidosha Kabushiki Kaisha, Toyota-shi, Aichi 471-8571 (JP)
(72) Inventor: ODA, Shingo, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/059175
(87) International publication number: WO 2013/150615

(57) **Abstract**

A torque variation absorber device includes: a disc plate (30) to which rotation torque is input from the engine; a boss member (12) receiving rotation torque from the disc plate; a cam member (11) provided at the boss member to rotate integrally with the boss member; an arm member (20,40) having one end (22,42) abutting against a cam face of the cam member with a fulcrum section (24,44) provided at the disc plate as the center of oscillation; and a coil spring (3,4) abutting against the other end (26,46) of the arm member and the disc plate, and compressed in a circumferential direction of the disc plate under a state where the disc plate and the member are rotated relatively. The coil spring imparts resilient force to the cam member under a state where the disc plate and the boss member are not rotating relatively.

## Description

### TECHNICAL FIELD

The present invention relates to the technique of absorbing variation in rotation torque input from a power source.

### BACKGROUND ART

A torque variation absorber device including a damper mechanism to alleviate the impact when a great load is transmitted from the power source to the transmission in the event of starting a vehicle is disclosed in, for example, WO2011/067815A1 (PTD 1) and Japanese Patent Laying-Open No. 2008-025629 (PTD 2).

### CITATION LIST

### PATENT DOCUMENT

PTD 1: WO2011/067815A1
PTD 2: Japanese Patent Laying-Open No. 2008-025629

### SUMMARY OF INVENTION

### TECHNICAL PROBLEM

There is the case where, due to an error in the dimension of a component at the time of fabrication and/or variation in the attached position during assembly, a deviation is seen between the center of rotation of a rotation member at the input axis side of the torque variation absorber device that receives rotation torque from the power source and the center of rotation of a rotation member at the output axis side of the torque variation absorber device that transmits rotation torque to the transmission. Such a deviation in the center of rotation may lead to the generation of noise, abrasion and the like at the constituent elements of the torque variation absorber device when the rotation torque is transmitted.

An object of the present invention is to provide a torque variation absorber device that suppresses the generation of noise, abrasion and the like caused by deviation between the center of rotation at the input side and the center of rotation at the output side.

### SOLUTION TO PROBLEM

A torque variation absorber device according to an aspect of the present invention includes a first rotation member to which rotation torque is input, a second rotation member receiving rotation torque from the first rotation member, a cam member provided at the second rotation member to rotate integrally with the second rotation member, an arm member having one end abutting against a cam face of the cam member with a fulcrum section provided at the first rotation member as the center of oscillation, and a resilient member abutting against the other end of the arm member and the first rotation member, and compressed in a circumferential direction of the first rotation member under a state where the first rotation member and the second rotation member are rotated relatively. The resilient member imparts resilient force to the cam member under a state where the first rotation member and the second rotation member are not rotating relatively.

Preferably, the resilient member is held in a state compressed by a predetermined distance when in a state where the first rotation member and the second rotation member are not rotating relatively.

Further preferably, the predetermined distance is set such that a state is maintained where the other end of the arm member and the resilient member abut, and where the one end of the arm member and the cam member abut when an amount of deviation between the center of rotation of the first rotation member and the center of rotation of the second rotation member takes an upper limit.

Further preferably, the cam member has a cam face of an oval shape.

Further preferably, the first rotation member has a disc shape in which a circular opening is provided at the center of rotation. The second rotation member has a cylindrical shape, and is arranged at the opening of the first rotation member. The first rotation member and the second rotation member are arranged to have a gap of a predetermined amount.

Further preferably, the resilient member is a first resilient member. The first rotation member has a disc shape in which a circular opening is provided at the center of rotation. The second rotation member has a cylindrical shape, and is arranged at the opening of the first rotation member. A second resilient member is provided between the first rotation member and the second rotation member.

Further preferably, the arm member is provided in multiple so as to be spaced apart by a predetermined interval in the circumferential direction of the first rotation member.

Further preferably, the arm members are arranged in point-symmetry about a center axis of the first rotation member.

A transmission according to another aspect of the present invention includes a clutch device, and a shift mechanism coupled to the clutch device. The clutch device includes a torque variation absorber device for absorbing variation in rotation torque input to the clutch device from a power source. The torque variation absorber device includes a first rotation member to which rotation torque is input, a second rotation member for transmitting the rotation torque received from the first rotation member to the shift mechanism, a cam member provided at the second rotation member and having a cam face of an oval shape rotating integrally with the second rotation member, an arm member having one end abutting against the cam face with a fulcrum section provided at the first rotation member as the center of oscillation, and a resilient member abutting against each of the other end of the arm member and the first rotation member, and compressed in a circumferential direction of the first rotation member under a state where the first rotation member and the second rotation member are rotated relatively. The resilient member imparts resilient force to the cam member under a state where the first rotation member and the second rotation member are not rotating relatively.

### ADVANTAGEOUS EFFECTS OF INVENTION

According to the present invention, resilient force is imparted to the cam member by a resilient member under a state where the first rotation member and the second rotation member are not rotating relatively. Therefore, the abutting state between constituent elements located between the first rotation member and the second rotation member is maintained by expansion of the resilient member even in the case where there is a deviation between the center of rotation of the first rotation member and the center of rotation of the second rotation member. Accordingly, the generation of noise, abrasion and the like at constituent elements of the torque variation absorber device for transmitting rotation torque without interruption can be suppressed. As a result, the generation of noise, abrasion and the like at the relevant constituent elements can be suppressed. Thus, there can be provided a torque variation absorber device that suppresses the generation of noise, abrasion and the like caused by a deviation between the center of rotation at the input side and the center of rotation at the output side.

### BRIEF DESCRIPTION OF DRAWINGS

Fig. 1 is a schematic partial sectional view of a clutch device according to an embodiment.
Fig. 2 is a front and partial sectional view of a clutch device in which a torque variation absorber device according to an embodiment is provided.
Fig. 3 represents a state of a coil spring before and after assembly.
Fig. 4 is a diagram to describe resilient force imparted to a cam member.
Fig. 5 represents the relationship between a torsion angle and torque.
Fig. 6 is a diagram to describe resilient force imparted to a cam member when there is a deviation in the center of rotation.
Fig. 7 represents the relationship between a torsion angle and torque when there is a deviation in the center of rotation.
Fig. 8 represents a modification of a torque variation absorber device.

### DESCRIPTION OF EMBODIMENTS

Embodiments of the present invention will be described hereinafter with reference to the drawings. In the description, the same elements have the same reference characters allotted. Also, designation and function thereof are the same. Therefore, detailed description thereof will not be repeated.

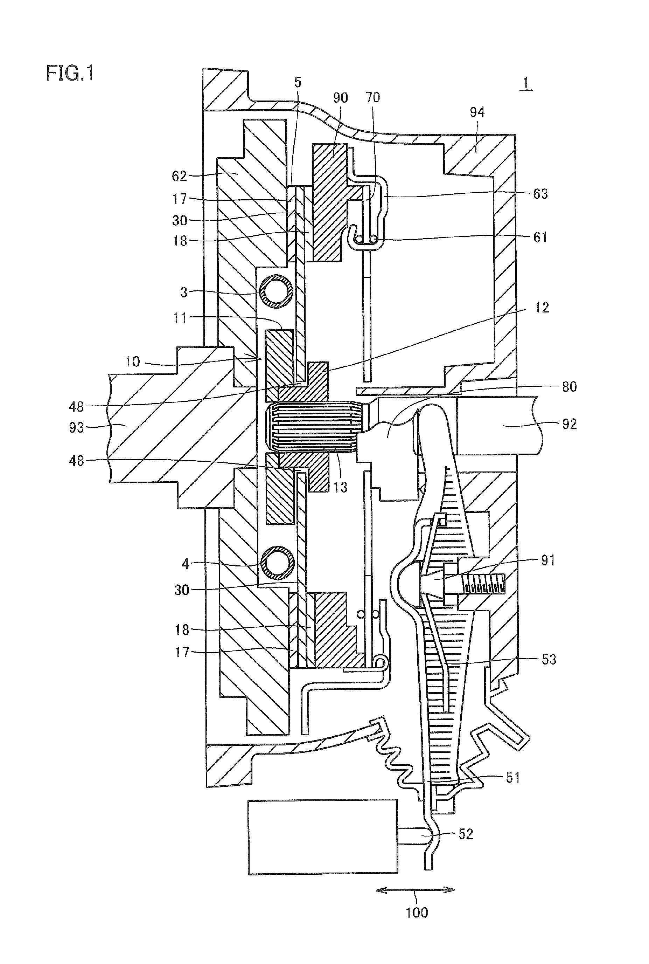

A torque variation absorber device according to the present embodiment is provided at a clutch disc of a clutch device 1 incorporated in a vehicle. Fig. 1 represents a side view of clutch device 1 of the present embodiment with a partial cross section. Clutch device 1 of the present embodiment is arranged between an engine and a shift mechanism to transmit the power generated at the engine to the shift mechanism. Furthermore, clutch device 1 functions to disconnect the power generated at the engine from the shift mechanism. Clutch device 1 of the present embodiment is the so-called dry-type single plate clutch. The transmission of the present embodiment includes clutch device 1 and a shift mechanism.

Clutch device 1 includes a flywheel 62. Flywheel 62 is formed in a disk shape, having an engine shaft 93 inserted through its center to be secured. Flywheel 62 is formed in a rotatable manner. Engine shaft 93 functions to output the rotation force of the engine. The rotation force of the engine is transmitted to flywheel 62 via engine shaft 93.

Clutch device 1 includes a housing 94. Housing (casing) 94 is attached with a clutch release fork 51. Clutch release fork 51 is connected to a clutch release cylinder 52 and a spring 53, by which it is biased. Clutch release cylinder 52 is arranged so as to repel against this biasing force.

Clutch release cylinder 52 pushes clutch release fork 51 in the direction indicated by arrow 100 such that a strut 91 becomes the center of rotation. Clutch release fork 51 forms contact with clutch release cylinder 52 at one end, and forms contact with a clutch release bearing 80 at the other end. Clutch release fork 51 is formed in a rotatable manner. The rotation of clutch release fork 51 causes clutch release bearing 80 to move in the axial direction, allowing the connection and disconnection of the clutch.

Clutch device 1 includes a clutch disc 5. Clutch device 1 includes a pressure plate 90 to press clutch disc 5. Clutch disc 5 and pressure plate 90 are arranged in housing 94. Clutch disc 5 according to the present embodiment takes a disc shape.

Flywheel 62 and clutch disc 5 are arranged such that their axes of rotation match. Therefore, flywheel 62 and clutch disc 5 are arranged such that their axis of rotation is substantially on a straight line.

Pressure plate 90 according to the present embodiment is formed in an annular shape. Pressure plate 90 is formed to push clutch disc 5 toward flywheel 62 through a uniform force. The face of pressure plate 90 in contact with clutch disc 5 is formed flat.

At the region of the center of rotation of clutch disc 5, a clutch hub 10 for insertion of an input shaft 92 is arranged.

Clutch hub 10 has a cylindrical section, which is arranged in the circular opening at the center of rotation of disc plate 30. Input shaft 92 is included in the shift mechanism. Input shaft 92 functions to apply the rotational force to a rotation element in the shift mechanism.

Clutch disc 5 includes a disc plate 30 of a circular disc. Disc plate 30 may be formed of disc spring of a circular disc having resilience and a subplate secured to the opening formed at the inner circumferential region of the disc spring.

At the outer circumferential side of disc plate 30, clutch linings 17 and 18 qualified as a clutch facing are arranged to sandwich disc plate 30, and fixed. Clutch lining 17 is arranged at the engine side whereas clutch lining 18 is arranged at the transmission side. Clutch linings 17 and 18 are formed in an annular shape. Clutch linings 17 and 18 as well as disc plate 30 are secured to disc plate 30 by the provision of a rivet (not shown) 16 through the direction of the stack. Clutch linings 17 and 18 are formed of a material having an appropriate friction coefficient, not changing in response to continuous change in temperature, superior in abrasion and heat resistance. Specifically, a resin mold type or woven mold type subject to resin treatment based on glass fiber, or semimetal made of metal or ceramic to improve heat transmission and strength may be employed.

A diaphragm spring 70 is a biasing member to push clutch disc 5 against flywheel 62 via pressure plate 90. Diaphragm spring 70 is a clutch spring. Pressure plate 90 is pushed toward clutch disc 5 by diaphragm spring 70.

Diaphragm spring 70 of the present embodiment is formed by press-molding a spring steel plate, followed by heat treatment, and is a spring of one disc. The present embodiment employs, but is not limited to diaphragm spring 70 as a clutch spring. A coil spring may be arranged.

Clutch release bearing 80 is formed to allow contact with diaphragm spring 70. Clutch release bearing 80 is formed such that diaphragm spring 70 can be pushed. Clutch release bearing 80 is provided such that input shaft 92 is moved in the axial direction by clutch release fork 51 without impeding the rotation of input shaft 92.

Clutch release fork 51 has one end connected to clutch release bearing 80 and the other end connected to clutch release cylinder 52. Clutch release fork 51 is a member to move clutch release bearing 80 in the axial direction, allowing clutch discs 5 and flywheel 62 to be connected and disconnected by the swing of clutch release fork 51. Diaphragm spring 70 is housed in clutch cover 63, and held by a pivot ring 61. Diaphragm spring 70 can push pressure plate 90 with pivot ring 61 as a fulcrum.

In responses to diaphragm spring 70 being moved in a certain direction by clutch release bearing 80, this direction of motion is altered by pivot ring 61 such that pressure plate 90 is moved in a direction opposite to clutch release bearing 80. For example, when clutch release bearing 80 moves in a direction closer to flywheel 62, pressure plate 90 moves in a direction away from flywheel 62.

When the driver steps on the clutch pedal, this operation is conveyed to clutch release cylinder 52, whereby the leading end of clutch release cylinder 52 pushes clutch release fork 51. Accordingly, clutch release fork 51 pivots about strut 91 to cause the leading end of clutch release fork 51 to push clutch release bearing 80. As a result, clutch release bearing 80 moves towards flywheel 62.

The movement of clutch release bearing 80 is conveyed to pressure plate 90 via diaphragm spring 70. Referring to Fig. 1, when clutch release bearing 80 is moved a direction closer to flywheel 62, this movement is converted by diaphragm spring 70 such that pressure plate 90 moves in a direction away from flywheel 62. Accordingly, the force of pressure plate 90 pushing clutch disc 5 against flywheel 62 is weakened such that the clutch is disengaged.

When the driver takes his/her foot off the clutch pedal, the tip of clutch release cylinder 52 retreats, such that clutch release bearing 80 moves in a direction away from flywheel 62 by the biasing force of spring 53. The biasing force of diaphragm spring 70 causes pressure plate 90 to push clutch disc 5 against flywheel 62 such that the clutch is engaged.

The connection of clutch disc 5 with flywheel 62 causes the rotation force of engine shaft 93 to be transmitted to clutch disc 5. The rotation force of clutch disc 5 is transmitted to input shaft 92 via clutch hub 10 inside. Thus, the rotation force of engine shaft 93 is transmitted to input shaft 92.

The present embodiment has been described in which pivot ring 61 qualified as a fulcrum point is arranged at the inner side than the contact point between pressure plate 90 and diaphragm spring 70, i.e. the so-called push type clutch. The present invention is not limited to this type, and the so-called pull type clutch device in which pivot ring 61 qualified as a fulcrum point is arranged at the outer side than the contact point between pressure plate 90 and diaphragm spring 70.

Further, although a hydraulic type clutch that drives clutch release fork 51 by clutch release cylinder 52 has been described as an example, the present invention is not limited to this type, and the so-called cable type clutch device that pulls clutch release fork 51 by a cable may be employed. Moreover, although a dry-type single plate clutch device has been described in the present embodiment, a wet-type multiplate clutch device may be employed in the present invention.

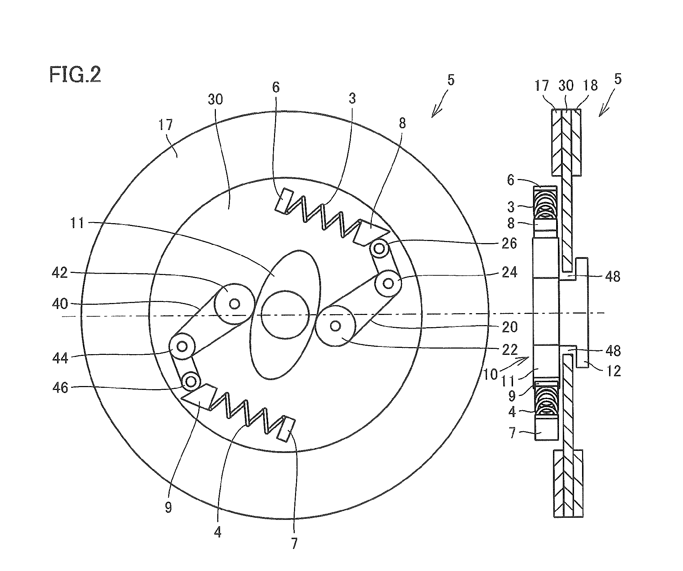

Fig. 2 represents a front view and a side view of clutch disc 5. For the purpose of illustration, a part of the structure (disc plate 30 with clutch linings 17 and 18) is shown in cross section in the side view of Fig. 2.

As shown in Figs. 1 and 2, clutch disc 5 includes coil springs 3, 4, support members 6, 7, clutch hub 10, spring sheets 8, 9, arm members 20, 40, and a disc plate 30 with clutch linings 17 and 18.

Clutch hub 10 includes a cam member 11 and a boss member 12. Although cam member 11 is described as having an oval cam face in the present embodiment, the shape is not particularly limited to an oval. For example, a polygonal shape formed having the corner rounded may be employed.

Boss member 12 has a cylindrical form, and is coupled with cam member 11. Boss member 12 opens at the input shaft 92 side of the transmission, and has a spline 13 formed therein. Boss member 12 is spline-fitted with input shaft 92 of the transmission. Boss member 12 is arranged such that its center of rotation coincides with the center of rotation of disc plate 30 at the opening of the center of rotation of disc plate 30.

Boss member 12 and disc plate 30 are arranged to have a gap 48 of a predetermined amount. Gap 48 of a predetermined amount is provided to avoid contact between the inner circumferential face of disc plate 30 and the outer circumferential face of boss member 12 in consideration of variation in the fabrication of the components constituting clutch disc 5 and variation in the assembly of clutch disc 5.

Cam member 11 and boss member 12 should at least rotate integrally. For example, cam member 11 and boss member 12 may be formed in one piece, or in separate pieces fitted through splines.

At the outer circumferential region of the end of boss member 12 at the transmission side, a flange is provided by forming a portion protruding radically (the direction orthogonal to the rotation axis of boss member 12) along the direction of the circumference. The outer diameter of the flange is greater than the inner diameter of the opening in disc plate 30.

Arm member 20 includes a fulcrum section 24 that becomes the center of oscillation, one end section 22 abutting against the cam face of cam member 11, and the other end section 26 abutting against coil spring 3 with spring sheet 8 that will be described afterwards therebetween. Arm member 20 has a bent shape with fulcrum section 24 as the folding point. At each of the abutting region of one end section 22 and the other end section 26 of arm member 20 with cam member 11, a curved face may be formed, or a pulley may be provided.

At one end of coil spring 3, a spring sheet 8 is provided. The other end of coil spring 3 abuts against a support member 6 secured to disc plate 30. Coil spring 3 may have the other end fixed to support member 6.

Spring sheet 8 is shaped to convert the force of the rotation direction of one end section 22 of arm member 20 about fulcrum section 24 to a force in the expanding/contracting direction of coil spring 3. The moving direction of spring sheet 8 is restricted to the expanding/contracting direction of coil spring 3. Any movement in a direction other than the expanding/contracting direction of coil spring 3 is restricted.

For example, a guide groove may be formed at disc plate 30 in the expanding/contracting direction of coil spring 3. Further, a protruding section having a shape fittable into the guide groove may be formed in spring sheet 8 at the side of disc plate 30. The sliding of the protruding section of spring sheet 8 along the guide groove restricts the moving direction of spring sheet 8 in the expanding/contracting direction of coil spring 3.

Alternatively, two guide walls may be formed at disc plate 30 in a direction parallel to the expanding/contracting direction of coil spring 3. The two guide walls are formed to sandwich spring sheet 8. The sliding of spring sheet 8 between the two guide walls restricts the moving direction of spring sheet 8 in the expanding/contracting direction of coil spring 3.

In the present embodiment, the expanding/contracting direction of coil spring 3 is the direction of the circumference of disc plate 30. The expanding/contracting direction of coil spring 3 is the direction in which coil spring 3 is compressed when disc plate 30 and clutch hub 10 are under a state where they rotate relatively. The direction is not particularly limited to the circumferential direction, and may be any direction with a predetermined angle to the circumferential direction.

One end section 22 of arm member 20 abuts against a cam face of cam member 11 at a site close to the center of axis when disc plate 30 and clutch hub 10 are under a state where they do not rotate relatively.

Coil spring 4, support member 7, spring sheet 9 and arm member 40 have a structure and function identical to those of coil spring 3, support member 6, spring sheet 8 and arm member 20, respectively, except that they are arranged at disc plate 30 so as to be point-symmetric to the center axis. Therefore, detailed description thereof will not be repeated.

Although the present embodiment is described in which two sets of a configuration including coil spring 3, support member 6, spring sheet 8 and arm member 20 are provided, the present invention is not limited particularly to two sets. For example, at least one set of the aforementioned configurations is to be provided. Moreover, the aforementioned configuration, when provided in plurality, is not limited to an arrangement in point-symmetry. For example, when a plurality of the aforementioned configurations are provided, they may be arranged to have a predetermined interval in the circumferential direction of disc plate 30.

There may be a case where a deviation is seen between the center of rotation of disc plate 30 and the center of rotation of clutch hub 10 due to an error in the dimension of a component at the time of fabrication and/or variation in the attached position during assembly. Such a deviation in the center of rotation may cause a gap to be generated between adjacent constituent elements. A gap between adjacent constituent elements may lead to the case where the transmission of the rotation torque is spontaneously interrupted. This may cause the generation of noise, abrasion and the like at clutch disc 5, particularly at spline 13 of boss member 12.

The present embodiment is characterized in that a resilient force is imparted by coil springs 3 and 4 to cam member 11 under a state where disc plate 30 and boss member 12 are not rotating relatively.

Specifically, coil springs 3 and 4 are held under a state where they are compressed by a predetermined distance in a state where disc plate 30 and boss member 12 are not rotating relatively.

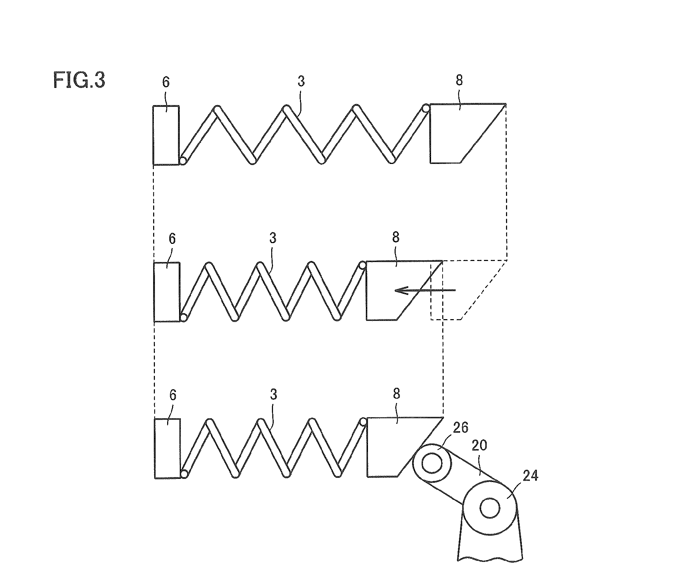

For example, as shown in Fig. 3, arm member 20 is assembled under a state where coil spring 3 of a length L (0) is compressed by a predetermined distance ΔL, i.e. under a state where coil spring 3 takes a length L(1). Accordingly a resilient force corresponding to the compressed amount of a predetermined distance ΔL is imparted to cam member 11 through arm member 20.

Coil spring 4 is assembled in a manner similar to that of coil spring 3. Therefore, detailed decryption thereof will not be repeated.

Predetermined distance ΔL is set such that the abutting state between the components of coil springs 3,4, support member 6,7, spring sheets 8,9, cam member 11 and arm members 20,40 is maintained when the amount of deviation between the center of rotation of cam member 11 and the center of rotation of disc plate 30 takes an upper limit.

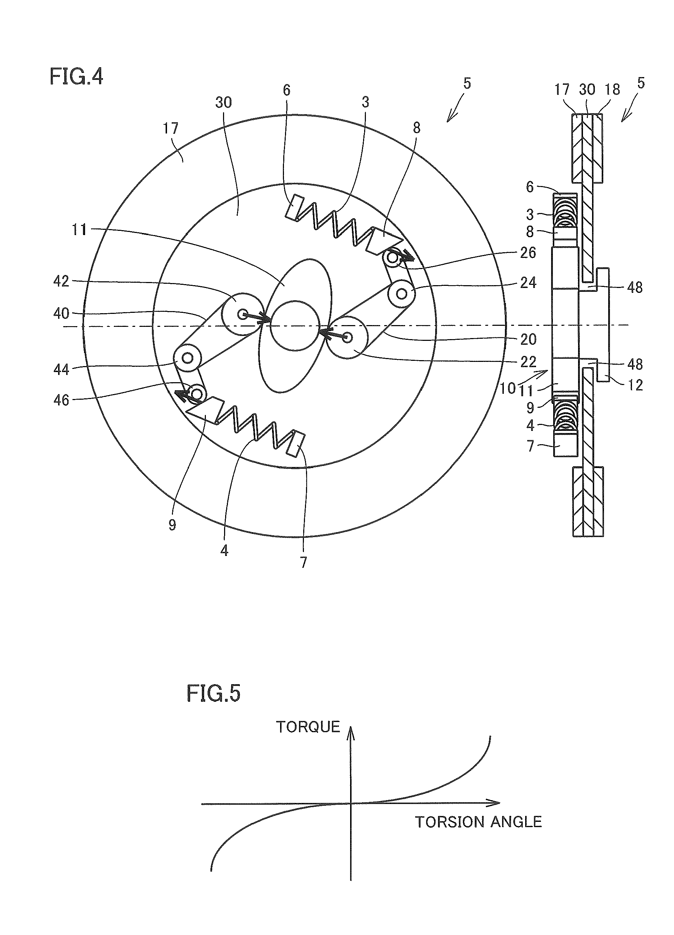

The function of the torque variation absorber device having the configuration set forth above will be described hereinafter based on Figs. 4-7.

### <When the center of rotation of disc plate 30 and the center of rotation of boss member 12 coincide>

Consider the case where the center of rotation of disc plate 30 and the center of rotation of boss member 12 coincide, as shown in Fig. 4. Description will be provided assuming that disc plate 30 rotates counter clockwise when rotation torque is input from the engine and boss member 12 is turned clockwise in the front view of clutch disc 5 in Fig. 4.

Under a state where disc plate 30 and boss member 12 are not rotating relatively, i.e. under a state where the torsion angle of disc plate 30 and boss member 12 is substantially zero and small, cam member 11 held in the initial position rotates integrally with boss member 12, as shown in Fig. 4.

Coil springs 3 and 4 are held in a compressed state. Therefore, the resilient force generated depending on the compressed amount of coil springs 3 and 4 is imparted to cam member 11 through arm members 20 and 40, respectively.

One end sections 22 and 42 of arm members 20 and 40 abut against the cam face of cam member 11 having a small curvature. The pushing of arm members 20 and 40 against spring sheets 8 and 9 by cam member 11 causes each of coil springs 3 and 4 to be biased by cam member 11.

At this stage, arm members 20 and 40 push cam member 11 by the principle of leverage, with fulcrum sections 24 and 44 as the fulcrum through the reaction force of coil springs 3 and 4. Accordingly the rotation torque of disc plate 30 is transmitted to cam member 11 through coil springs 3 and 4 and arm members 20 and 40. Boss member 12 rotates to transmit the rotation torque of the engine to the input axis of the transmission.

At this stage, the torsional rigidity of disc plate 30 and boss member 12 is low since the compressed amount of coil springs 3 and 4 is small.

Through the rotation of cam member 11 as disc plate 30 and boss member 12 rotate relatively to increase the torsion angle thereof, one end sections 22 and 42 of arm members 20 and 40 slide along the cam face of cam member 11.

The curvature of the cam face becomes greater as a function of greater torsion angle between disc plate 30 and boss member 12 from the initial position of cam member 11. Therefore, the biasing force of arm members 20 and 40 towards coil springs 3 and 4 gradually becomes greater in accordance with cam member 11 rotating clockwise.

Thus, by the reaction force of coil springs 3 and 4 compressed through the bias of arm members 20 and 40 thereto, arm members 20 and 40 push cam member 11 by a strong force through by the principle of leverage with fulcrum sections 24 and 44 as each fulcrum. Accordingly the rotation torque of disc plate 30 is transmitted to cam member 11 via coil springs 3 and 4 as well as arm members 20 and 40.

In this case, by increasing the biasing force towards each of coil springs 3 and 4 by cam member 11 as the torsion angle of disc plate 30 and boss member 12 becomes greater, the torsional rigidity of disc plate 30 and boss member 12 can be increased.

Fig. 5 represents the relationship between the torsion angle of disc plate 30 and boss member 12 and the output torque from boss member 12. In Fig. 5, the horizontal axis represents the torsion angle of disc plate 30 and boss member 12, whereas the vertical axis represents the output torque to the transmission from boss member 12. The output torque corresponds to the reaction force of boss member 12 relative to disc plate 30. The positive direction along the vertical axis in Fig. 5 corresponds to the torsion clockwise from the initial state of cam member 11.

As shown in Fig. 5, coil springs 3 and 4 are compressed as the torsion angle of boss member 12 relative to disc plate 30 becomes greater. Accordingly the pushing force towards cam member 11 by arm members 20 and 40 is increased. This increase of the pushing force leads to a greater output torque. At this stage, the change in the output torque is a stepless curved torsion property that changes continuously.

### <When the center of rotation of disc plate 30 and the center of rotation of boss member 12 do not coincide>

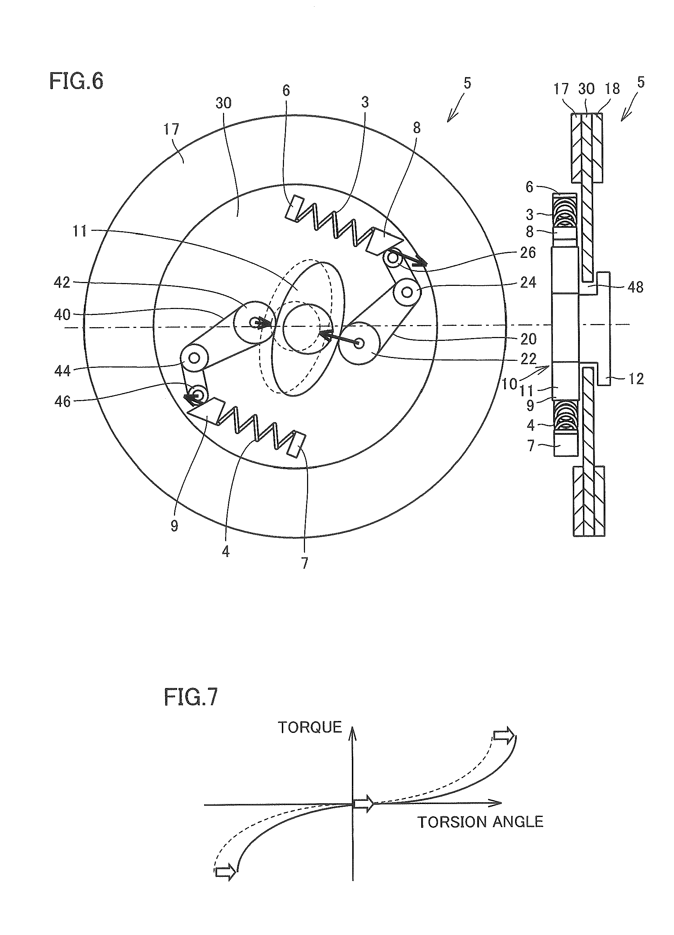

Consider the case where the center of rotation of disc plate 30 and the center of rotation of boss member 12 do not coincide, as shown in Fig. 6, due to variation in fabrication or in assembling.

The position of cam member 11 indicated by the broken line in Fig. 6 is the same position as cam member 11 shown in Fig. 5, corresponding to the initial position when the center of rotation of disc plate 30 and the center of rotation of boss member 12 coincide. In the following description, the position of cam member 11 indicated by the broken line in Fig. 6 is referred to as the first initial position whereas the position of cam member 11 in the event of a deviation in the center of rotation indicated by the solid line in Fig. 6 is referred to as the second initial position.

The rotation direction of disc plate 30 and the torsion direction of boss member 12 in Fig. 6 are identical to those described with reference to Fig. 5. Therefore, description thereof will not be repeated.

Under a state where disc plate 30 and boss member 12 are not rotating relatively, i.e. under a state where the torsion angle of disc plate 30 and boss member 12 is substantially zero and small, cam member 11 is held at the second initial position differing from the first initial position, and rotates integrally with boss member 12.

As shown in Fig. 6, the center of rotation of cam member 11 at the second initial position is deviated towards the side of one end section 22 of arm member 20 relative to the center of rotation of disc plate 30. One end section 22 of arm member 20 is located at the outer circumferential side of disc plate 30 than the location of one end section 22 when the initial position of cam member 11 is the first initial position at disc plate 30. The other end section 26 of arm member 20 is located moved in the direction of compressing coil spring 3 than the location of the other end section 26 when the initial position of the cam member is the first initial position.

At this stage, the abutting state between adjacent constituent elements of coil spring 3, support member 6, spring sheet 8, cam member 11 and arm member 20 is maintained.

One end section 42 of arm member 40 is located at the inner circumference side of disc plate 30 than the position of one end section 42 when the initial position of cam member 11 is the first initial position at disc plate 30. Therefore, the other end section 46 of arm member 40 is located moved in the direction of expanding coil spring 4 than the location of the other end section 46 when the initial position of the cam member is the first initial position.

Coil spring 4 is held under a state compressed by just a predetermined distance ΔL when cam member 11 is held at the first initial position. Therefore, when cam member 11 is shifted from the first initial position to the second initial position, coil spring 4 expands according to the change in the position of other end section 46 of arm member 40.

At this stage, the abutting state between adjacent constituent elements of coil spring 4, support member 7, spring sheet 9, cam member 11 and arm member 40 is maintained.

When the initial position of cam member 11 is the second initial position, the length of coil spring 3 is shorter than the length of coil spring 4. Therefore, when the initial position of cam member 11 is the second initial position, the resilient force imparted to cam member 11 from coil spring 3 via arm member 20 becomes greater than the resilient force imparted to cam member 11 from coil spring 4 via arm member 40, as shown by the arrow in Fig. 6.

Even in the case where the initial position of cam member 11 is the second initial position, the torsion property of disc plate 30 and boss member 12 integrally rotating to cause a larger output torque as the torsion angle between disc plate 30 and boss member 12 increases is established, similar to the case in the first initial position.

When the initial position of cam member 11 is the second initial position, there is a difference between the resilient force acting on cam member 11 from coil spring 3 and the resilient force acting on cam member 11 from coil spring 4 even if the torsion angle is identical corresponding to the deviation amount of the center of rotation as compared to the case where the initial position is the first initial position.

Therefore, as shown by the solid line in Fig. 7 of the output torque caused by the difference in the resilient force acting on cam member 11, the relationship between the torsion angle and the output torque is offset in the positive direction of the torsion angle as compared with the relationship between the torsion angle and the output torque when the initial position is the first initial position, indicated by the broken line in Fig. 7.

The operation of the torque variation absorber device when cam member 11 is at the second initial position is similar to that of the torque variation absorber device when cam member 11 is at the first initial position, except for the offset of the aforementioned relationship between the torsion angle and the output torque. Therefore, detailed description thereof will not be repeated.

Thus, according to the torque variation absorber device of the present embodiment, resilient force is imparted to cam member 11 by coil springs 3 and 4 being held in a compressed state when disc plate 30 and boss member 12 are not rotating integrally. Accordingly, the abutting state between constituent elements arranged on the torque transmission path from disc plate 30 to boss member 12 is maintained through the expansion of any of coil springs 3 and 4, even in the case where there is a deviation between the center of rotation of disc plate 30 and the center of rotation of boss member 12. Therefore, generation of noise, abrasion and the like at the constituent elements (for example, spline 13 of boss member) of the torque variation absorber device can be suppressed by virtue of allowing the rotation torque to be transmitted without interruption. Thus, there can be provided a torque variation absorber device that can appropriately absorb the deviation between the center of rotation at the input side and the center of rotation at the output side.

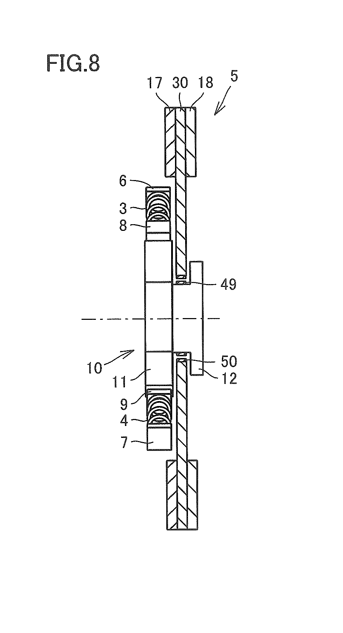

Although the present embodiment has been described based on the arrangement of a gap of a predetermined amount between disc plate 30 and boss member 12, a resilient member 49 and a resilient member 50 may be provided at the inner circumferential face of disc plate 30 and the outer circumferential face of boss member 12, respectively, as shown in Fig. 8, in addition to the arrangement of a gap of a predetermined amount between disc plate 30 and boss member 12.

Further, the present invention is not limited to the provision of a resilient member at both the inner circumferential face of disc plate 30 and the outer circumferential face of boss member 12 shown in Fig. 8. For example, a resilient member may be provided at only one of the inner circumferential face of disc plate 30 and the outer circumferential face of boss member 12.

This allows the contact of disc plate 30 and boss member 12 to be suppressed or absorb the impact, if any, during the operation of the torque variation absorber device even in the event of a deviation between the center of rotation of disc plate 30 and the center of rotation of boss member 12.

It will be understood that the embodiments of the present invention disclosed herein are by way of example only, and is not to be taken by way of limitation in all aspects. The scope of the present invention is defined, not by the description set forth above, but by the appended claims, and all changes that fall within limits and bounds of the claims, or equivalence thereof are intended to be embraced by the claims.

### REFERENCE SIGNS LIST

1 clutch device; 3, 4 coil spring; 5 clutch disc; 6,7 support members; 8, 9 spring sheet; 10 clutch hub; 11 cam member; 12 boss member; 13 spline; 17, 18 clutch lining; 20, 40 arm member; 30 disc plate; 49 spline; 51 clutch release fork; 52 clutch release cylinder; 53 spring; 61 pivot ring; 62 flywheel; 70 diaphragm spring; 80 clutch release bearing; 90 pressure plate; 91 strut; 92 input shaft; 93 engine shaft; 94 housing.

## Claims

1. A torque variation absorber device comprising:
a first rotation member (30) to which rotation torque is input,
a second rotation member (12) receiving the rotation torque from the first rotation member,
a cam member (11) provided at the second rotation member to rotate integrally with the second rotation member,
an arm member (20,40) having one end (22,42) abutting against a cam face of the cam member with a fulcrum section (24,44) provided at the first rotation member as the center of oscillation, and
a resilient member (3,4) abutting against the other end (26,46) of the arm member and the first rotation member, and compressed in a circumferential direction of the first rotation member under a state where the first rotation member and the second rotation member are rotated relatively,
the resilient member imparting resilient force to the cam member under a state where the first rotation member and the second rotation member are not rotating relatively.

2. The torque variation absorber device according to claim 1, wherein the resilient member is held in a state compressed by a predetermined distance when in a state where the first rotation member and the second rotation member are not rotating relatively.

3. The torque variation absorber device according to claim 2, wherein the predetermined distance is set such that a state is maintained where the other end of the arm member and the resilient member abut, and where the one end of the arm member and the cam member abut when an amount of deviation between the center of rotation of the first rotation member and the center of rotation of the second rotation member takes an upper limit.

4. The torque variation absorber device according to claim 1, wherein the cam member has a cam face of an oval shape.

5. The torque variation absorber device according to claim 1, wherein
the first rotation member has a disc shape in which a circular opening is provided at the center of rotation,
the second rotation member has a cylindrical shape, and is arranged at the opening of the first rotation member, and
the first rotation member and the second rotation member are arranged to have a gap (48) of a predetermined amount.

6. The torque variation absorber device according to claim 1, wherein
the resilient member is a first resilient member,
the first rotation member has a disc shape in which a circular opening is provided at the center of rotation,
the second rotation member has a cylindrical shape, and is arranged at the opening of the first rotation member, and
a second resilient member (49,50) is provided between the first rotation member and the second rotation member.

7. The torque variation absorber device according to claim 1, wherein the arm member is provided in multiple so as to be spaced apart by a predetermined interval in the circumferential direction of the first rotation member.

8. The torque variation absorber device according to claim 7, wherein the arm members are arranged in point-symmetry about a center axis of the first rotation member.

9. A transmission comprising:
a clutch device (1), and
a shift mechanism (92) coupled to the clutch device,
the clutch device including a torque variation absorber device (5) for absorbing variation in rotation torque input to the clutch device from a power source,
the torque variation absorber device including
a first rotation member (30) to which the rotation torque is input,
a second rotation member (12) for transmitting the rotation torque received from the first rotation member to the shift mechanism,
a cam member (11) provided at the second rotation member to rotate integrally with the second rotation member,
an arm member (20,40) having one end (22,42) abutting against a cam face of the cam member with a fulcrum section (24,44) provided at the first rotation member as the center of oscillation, and
a resilient member (3,4) abutting against the other end (26,46) of the arm member and the first rotation member, and compressed in a circumferential direction of the first rotation member under a state where the first rotation member and the second rotation member are rotated relatively,
the resilient member imparting resilient force to the cam member under a state where the first rotation member and the second rotation member are not rotating relatively.
